# EUROPÄISCHE PATENTSCHRIFT

(11) **EP 1 983 658 B1**
(45) Veröffentlichungstag und Bekanntmachung des Hinweises auf die Patenterteilung: **21.02.2018**
(21) Anmeldenummer: 08014163.3
(22) Anmeldetag: 05.10.2001
(51) Int. Cl.: H04B 7/005, H04W 52/22, H04W 52/50

(54) **Verfahren und Anordnung zur Leistungsteuerung**
Method and device for power control
Procédé et dispositif de commande de puissance

(30) Priorität: 10.10.2000 EP 00122013
(43) Veröffentlichungstag der Anmeldung: 22.10.2008
(62) Teilanmeldung aus: 01976275.6
(73) Patentinhaber: Siemens Aktiengesellschaft, 80333 München (DE)
(72) Erfinder: Raaf, Bernhard, 82061 Neuried (DE)

(56) Entgegenhaltungen:
- EP-A2- 0 917 304
- US-A- 5 465 399
- "UNIVERSAL MOBILE TELECOMMUNICATIONS SYSTEM (UMTS);PHYSICAL LAYER PROCEDURES(FDD) (3GPP TS 25.214 VERSION 3.4.0 RELEASE 1999)", ETSI TS 125 214 V3.4.0, XX, XX, 1. September 2000 (2000-09-01), Seiten 1-48, XP002166612,

## Beschreibung

Die Erfindung betrifft ein Verfahren und eine Anordnung zur Initiierung einer Kommunikation, insbesondere einer Kommunikationsverbindung. Insbesondere betrifft die Erfindung die Initiierung der Leistungsregelung bzw. ein Verfahren und eine Anordnung zur Leistungssteuerung.

Im Rahmen von Mobilkommunikationssystemen ist es bekannt, die Initiierung bzw. Einleitung einer Kommunikation durch das Senden eines Initiationssignals von einer Mobilstation, wie beispielsweise einem Mobiltelefon (auch User Equipment UE genannt), an eine Basisstation (auch Node B genannt) zu starten. Bei dem Initiationssignal kann es sich um eine sogenannte RACH (Random Access Channel) Nachricht oder um eine Präambel, d.h. eine spezifische Nachricht vor einer möglichen RACH Nachricht, handeln.

Ein besonders wichtiges Element von CDMA (Code Division Multiple Access)-Systemen, wie beispielsweise dem UMTS (Universal Mobile Telecommunications System), bildet die Leistungsregelung. Das hierbei für die Übertragung von Daten verwendete closed-loop power control Verfahren kann für die initiierende RACH-Übertragung nicht verwendet werden, da es nicht vor dem Beginn der Übertragung durchgeführt werden kann. Daher wird für die initiierende RACH-Übertragung ein sogenanntes open loop power control Verfahren verwendet. Da es mit diesem Verfahren nicht möglich ist, die ideale Uplink-Leistung (Leistung eines Signals, das von der Mobilstation zur Basisstation gesendet wird, und an der Basisstation mit der für einen Empfang erforderlichen Leistung ankommt) mit hoher Genauigkeit zu ermitteln, wird zusätzlich ein sogenanntes power ramping Verfahren eingesetzt, bei dem RACH Nachrichten mit ansteigender Leistung wiederholt von der Mobilstation gesendet werden. Wenn die Leistung der gesendeten RACH Nachricht zu gering ist, wird die Nachricht nicht von der Basisstation empfangen und keine Bestätigungsnachricht von der Basisstation an die Mobilstation übermittelt und die Übertragung der RACH Nachricht von der Mobilstation an die Basisstation mit größerer Leistung wiederholt. Wenn die Leistung der RACH Nachricht groß genug ist, wird die Nachricht von der Basisstation empfangen und eine Bestätigungsnachricht von der Basisstation an die Mobilstation übermittelt. Anstatt einer vollständigen RACH Nachricht kann auch nur ein verkürztes Signal, eine sog. Präambel gesendet werden.

Ein derartiges Verfahren ist beispielsweise bekannt aus EP 0917304 A2. Dabei wird die Übertragung eines initiierenden Signals ausgehend von einer ermittelten Anfangsleistung solange mit steigender Leistung wiederholt bis entweder eine Bestätigungsnachricht empfangen wird oder die Anzahl der Wiederholungen einen Schwellwert überschreitet. Wenn eine Bestätigungsnachricht empfangen wird, wird mit der Übertragung von Daten fortgefahren. Wenn die Anzahl der Wiederholungen einen Schwellwert überschreitet, wird das Verfahren wieder mit der Übertragung eines initiierenden Signals mit einer Anfangsleistung begonnen.

Ein weiterentwickeltes Verfahren dieser Art ist bekannt aus "ETSI TS 125.214, V3.4.0-DRAFT (2000-09), UMTS, Physical layer procedures (FDD), (Release 1999)". Hierbei ist insbesondere in Kapitel 6.1 die sogenannte Random Access Procedure beschrieben, welche allgemein die Initiierung der Kommunikation, und insbesondere in den Schritten 4 bis 7 und 9 bis 10 die Initiierung der Leistungsregelung beschreibt. Hierbei wird die initiierende Nachricht, welche von der Mobilstation zur Basisstation gesendet wird, Präambel genannt. Im folgenden wird dieses Verfahren kurz erläutert, wobei zur Vereinfachung die Schritte nicht aufgeführt sind, welche zum Verständnis des Leistungsregelungsverfahrens nicht erforderlich sind; insbesondere wird auf die Zuordnung von verschiedenen slots (Zeitschlitzen) bzw. Kanälen zu verschiedenen Mobilstationen nicht näher eingegangen.

In Schritt 4 des in 6.1 beschriebenen Verfahrens wird ein Zähler zur Zählung der Wiederholungen der Übertragung der Präambel auf den Wert Preamble_Retrans_Max gesetzt.

In Schritt 5 wird die Leistung für die Übertragung der Präambel auf den Wert Preamble_Initial_Power (Anfangsleistung) gesetzt.

In Schritt 6 wird eine Präambel mit der Leistung preamble transmission power in einem access Zeitschlitz von der Mobilstation an die Basisstation gesendet.

Wird in Schritt 7 mobilstationsseitig keine Bestätigungsnachricht (weder eine positive Bestätigungsnachricht ("positive acquisition indicator") noch eine negative Bestätigungsnachricht ("negative acquisition indicator")) detektiert, so wird in Schritt 7.3 die Leistung zum Senden der Präambel um ΔP₀ = Power_Ramp_Step [dB] erhöht.

In Schritt 7.4 wird der Zähler zur Zählung der Wiederholungen der Übertragung der Präambel um eins reduziert.

Wenn in Schritt 7.5 der Zähler zur Zählung der Wiederholungen der Übertragung der Präambel > 0 ist, so wird bei Schritt 6 fortgefahren, andernfalls wird festgestellt, dass keine Bestätigungsnachricht empfangen wurde und die Prozedur verlassen.

Falls eine negative Bestätigungsnachricht empfangen wird, wird die Prozedur in Schritt 8 verlassen.

In Schritt 9 wird - für den Fall, dass eine positive Bestätigungsnachricht ("positive acquisition indicator") empfangen wurde - eine Random Access Nachricht an die Basisstation gesendet.

In Schritt 10 wird festgestellt, dass die Random Access Nachricht übertragen wurde.

Allerdings ist in der Praxis die Leistung, mit der eine Mobilstation innerhalb eines Mobilfunksystems senden darf, durch eine maximale Leistung begrenzt, deren Überschreitung zu einer Verschlechterung der Übertragungsqualität beispielsweise aufgrund verschlechterter Phasengenauigkeit oder Modulationsgenauigkeit führen kann. Auch kann die Leistung von Zelle zu Zelle zur Verringerung von Interferenzen unterschiedlich begrenzt sein. Des weiteren kann die Maximalleistung einer Mobilstation durch Regulierungsvorschriften oder durch einen anzuwendenden Standard begrenzt sein. Außerdem sind Mobilstationen nicht in der Lage mit einer beliebig geringen Leistung zu senden. Daher werden in Mobilfunkstandards minimale Leistungen festegelegt, mit denen eine Mobilstation senden können muss.

Der Erfindung liegt nun auch die Aufgabe zugrunde, ein Verfahren und eine Anordnung zur Initiierung einer Kommunikation, insbesondere ein Verfahren und eine Anordnung zur Leistungssteuerung, anzugeben, durch welche die - in der Praxis gegebenen - Einschränkungen hinsichtlich der Sendeleistung von Mobilstationen derart berücksichtigt werden, dass gegenüber dem Stand der Technik weniger Energie verbraucht wird bzw. weniger Interferenzen im Mobilfunksystem verursacht werden.

Diese Aufgabe wird durch die Merkmale der unabhängigen Ansprüche gelöst. Vorteilhafte und zweckmäßige Weiterbildungen ergeben sich aus den abhängigen Ansprüchen.

Die Erfindung basiert demnach insbesondere auf dem Gedanken, ein stufenweises Erhöhen der Leistung (Power-Ramping), mit der eine Präambel gesendet wird, wobei die Leistung durch zumindest einen Extremwert begrenzt ist, derart durchzuführen, dass das Senden mit einer Leistung, die dem Extremwert entspricht, wiederholt durchgeführt wird.

Eine Wiederholung mit gleicher Leistung ist vorteilhaft, da es neben dem Senden der Präambel mit zu niedriger Leistung weitere zufällige oder kurzfristig bestehende Gründe dafür geben kann, dass keine Bestätigungsnachricht empfangen wird: Kollision auf dem Übertragungskanal, eine plötzliche kurzzeitige Interferenz, eine kurzzeitige hohe Dämpfung oder ein Fehler in der Übertragung der Bestätigungsnachricht, etc.

Je nach Ausführungsvariante kann es sich bei der Bestätigungsnachricht auch um eine positive und/oder negative Bestätigungsnachricht handeln, welche auch als Bestätigungssignal bezeichnet oder realisiert sein kann, das beispielsweise nur einen oder zwei verschiedene Werte annehmen kann.

Allerdings ist es nicht sinnvoll, das Senden der Präambel mit gleicher Leistung unbegrenzt zu wiederholen, da mit jeder Wiederholung die Wahrscheinlichkeit dafür größer wird, dass der Grund dafür, dass keine Bestätigungsnachricht empfangen wird, in der zu geringen Leistung der Präambel liegt. Daher sehen Weiterbildungen der Erfindung vor, das wiederholte Senden der Präambel mit der gleichen Leistung nach einer bestimmten Anzahl von Wiederholungen oder nach dem Eintritt einer anderen Bedingung zu beenden.

Der maximale Extremwert kann dabei beispielsweise durch den Standard des Mobilfunksystems, in dessen Rahmen die Erfindung eingesetzt wird, festgelegt sein.

Der minimale Extremwert kann dabei beispielsweise auch durch den Standard des Mobilfunksystems, in dessen Rahmen die Erfindung eingesetzt wird, festgelegt sein, oder durch einen von einem Hersteller der Mobilstation festgelegten Wert, der beispielsweise der minimalen von der Mobilstation realisierbaren Sendeleistung entspricht (das Mobilfunksystem kann beispielsweise einen Wert einer minimalen Sendeleistung festlegen, den eine Mobilstation mindestens erreichen können muss; die Mobilstation darf aber auch in der Lage sein, mit niedrigerer Sendeleistungen zu senden).

Im Rahmen der Erfindung können Formulierungen wie "außerhalb einer Begrenzung", "innerhalb einer Begrenzung", "zwischen einer Begrenzung", "größer als", "kleiner als" je nach Ausführungsvariante bedeuten, dass die entsprechende Grenze zu dem entsprechenden Intervall gehört, oder dass die entsprechende Grenze nicht zu dem entsprechenden Intervall gehört.

Eine Ausführungsvariante sieht vor, dass die erste Berechnung der Idealleistung, also der Anfangsleistung, bei der ein Inkrementieren wegen eines fehlenden vorhergehenden Bezugswertes nicht möglich ist, durch eine sogenannte open loop power control ersetzt wird. Dabei wird von der Mobilstation ermittelt, mit welcher Leistung von der Basisstation gesendete Signale bei der Mobilstation ankommen, und daraus abgeschätzt mit welcher Leistung die Mobilstation eine Präambel zu senden hat. Die erste berechnete Leistung entspricht dann dieser ermittelten Anfangsleistung.

Zur Lösung der Aufgabe ist auch eine Anordnung vorgesehen, welche eine Steuereinrichtung aufweist, die zur Durchführung der Verfahren und zur Durchführung entsprechender Weiterbildungen eingerichtet ist.

Die Erfindung wird im Folgenden anhand bevorzugter Ausführungsbeispiele näher beschrieben, zu deren Erläuterung nachstehend aufgelistete Figuren dienen:
Figur 1 Blockschaltbild einer Mobilstation;
Figur 2 vereinfachtes Ablaufdiagramm eines Verfahrens zur Initiierung einer Kommunikation.

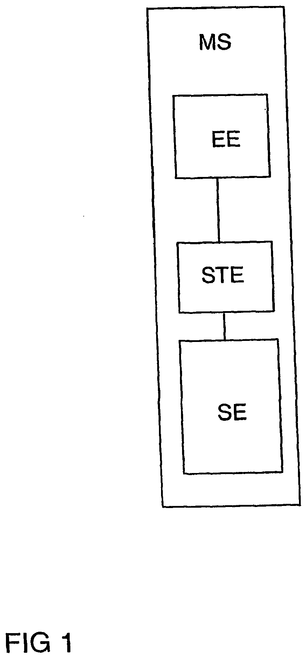

Figur 1 zeigt eine Mobilstation MS, wie beispielsweise ein UMTS-Mobiltelefon, mit einer Sendeinrichtung SE zum Senden einer Präambel und zum Senden von Steuerdaten und Nutzdaten und mit einer Empfangseinrichtung EE zum Empfangen einer Bestätigungsnachricht und zum Empfangen von Steuerdaten und Nutzdaten.

Die Empfangseinrichtung und die Sendeeinrichtung werden gesteuert durch eine Steuereinrichtung STE, welche einen programmtechnisch geeignet eingerichteten Mikrocontroller oder entsprechende geeignete Schaltungen enthalten kann.

Auf die detaillierte Realisierung der Mobilstation wird an dieser Stelle nicht näher eingegangen, da eine Mobilstation als solche dem Fachmann bekannt ist, und eine Einrichtung der Steuereinrichtung zur Durchführung der im Rahmen der Erfindung liegenden Verfahren bei Kenntnis der vorliegenden Anmeldung im Rahmen des fachmännischen Handelns liegt.

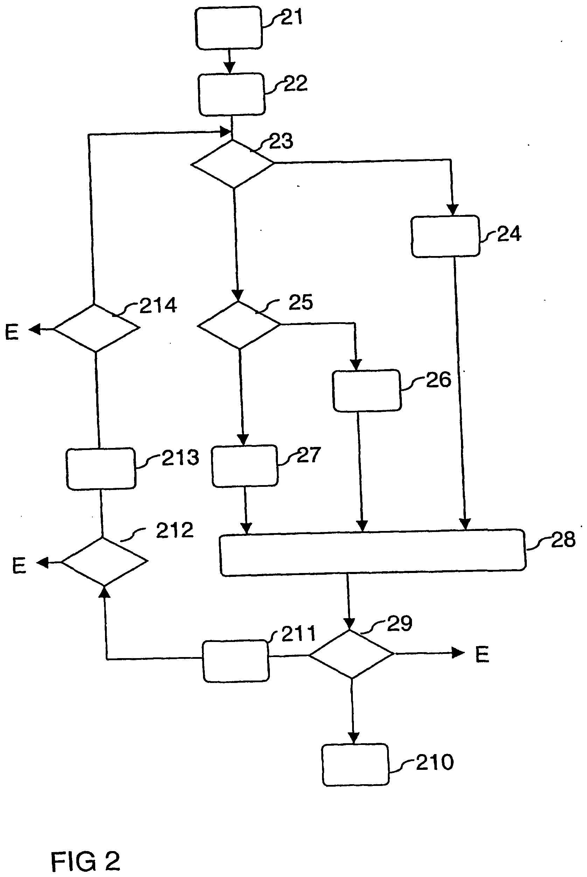

Figur 2 beschreibt die Initiierung einer Kommunikation zwischen Basisstation und Mobilstation, welche mit einer Abschätzung (open loop power control) der Anfangsleistung einer von der Mobilstation zu sendenden Präambel beginnt. Anschließend wird ein stufenweises Steigern der Leistung der Präambel (power ramping) durchgeführt bis eine Basisstation die Präambel empfängt bzw. detektiert und eine entsprechende Bestätigungsnachricht an die Mobilstation sendet, und diese die Bestätigungsnachricht empfängt bzw. detektiert. Wird eine Bestätigungsnachricht empfangen, so wird das Verfahren durch das Senden einer RACH-Nachricht fortgesetzt. Als Abbruch-Kriterien für das stufenweise Steigern der Leistung der Präambel dient das Über- bzw. Unterschreiten eines Zählerschwellwertes bzw. das Überschreiten einer maximalen Extremleistung um einen Schwellwert durch eine berechnete Idealleistung zum Senden der Präambel. In Klammern wird dabei eine zweite Nummerierung angegeben, um den Bezug und Unterschied des Verfahrens gegenüber dem eingangs angegebenen im ETSI-Dokument zu verdeutlichen.

In Schritt 21 (Schritt 4)des in Figur 2 dargestellten Verfahrens wird ein Zähler zur Zählung der Wiederholungen der Übertragung der Präambel auf den Wert "Preamble Retrans Max" gesetzt.

In Schritt 22 (Schritt 5) wird die berechnete Idealleistung (befohlene Leistung) der Präambel auf den Wert Preamble_Initial_Power (Anfangsleistung) gesetzt, welcher durch ein open loop power conrol Verfahren ermittelt wird. In Schritt 23 (Ergänzung zu Schritt 6) wird die berechnete Idealleistung mit einer maximal erlaubten Leistung (maximale Extremleistung) verglichen. Ist die berechnete Idealleistung größer als die maximal erlaubte Leistung, so wird die Leistung der Präambel in Schritt 24 auf die maximal erlaubte Leistung gesetzt und die Präambel in Schritt 28 mit dieser Leistung gesendet.

Ist die berechnete Idealleistung kleiner als die maximal erlaubte Leistung oder gleich der maximal erlaubten Leistung, so wird in Schritt 25 die berechnete Idealleistung mit einer - beispielsweise durch den Standard eines Mobilfunksystems oder durch einen Mobilfunksystembetreiber oder durch einen Hersteller - festgelegten minimalen Leistung (minimale Extremleistung) verglichen. Ist die berechnete Idealleistung kleiner als die festgelegte minimale Leistung, so wird die Leistung der Präambel in Schritt 26 auf einen Wert gesetzt, der zwischen der berechneten Idealleistung und der minimalen Leistung liegt, und die Präambel in Schritt 28 mit dieser Leistung gesendet. Dies ist insbesondere dann vorteilhaft, wenn die Mobilstation in der Lage ist, mit einer Leistung zu senden, die geringer ist, als die vorgeschriebene minimale Leistung. Eine Folge dieses Schrittes kann sein, dass mehrmals mit der gleichen Leistung, die zwischen der berechneten Idealleistung und der minimalen Leistung liegt, gesendet wird, je nachdem, wie weit die durch die open loop power control ermittelte Preamble_Initial_Power (Anfangsleistung) unter der festgelegten minimalen Leistung liegt. Wenn die open loop power control eine niedrige Anfangsleistung für die Präambel abschätzt, so weist dies darauf hin, dass mit hoher Wahrscheinlichkeit eine mit dieser Anfangsleistung gesendete Präambel von einer Basisstation empfangbar sein sollte; allerdings könnte ein erfolgloses Senden (kein Empfang einer Bestätigungsnachricht) einer Präambel auch durch eine Kollision auf dem Übertragungskanal, eine plötzliche kurzzeitige Interferenz, eine kurzzeitige hohe Dämpfung oder einen Fehler in der Übertragung der Bestätigungsnachricht begründet sein. Daher ist dieses wiederholte Senden der Präambel mit der gleichen niedrigen Leistung sinnvoll.

Ist die berechnete Idealleistung kleiner als die maximal erlaubte Leistung oder gleich der maximal erlaubten Leistung und größer als die festgelegte minimale Leistung oder gleich der festgelegten minimalen Leistung, so wird in Schritt 27 die Leistung der Präambel auf den Wert der berechneten Idealleistung gesetzt, und die Präambel in Schritt 28 mit dieser Leistung gesendet.

In den Schritten 23 bis 28 (Schritt 6) wird also eine Präambel mit berechneter Idealleistung in einem access Zeitschlitz von der Mobilstation an die Basisstation gesendet; falls dabei die berechnete Idealleistung (befohlene Leistung) der Präambel die maximal erlaubte Leistung überschreitet, so sendet die Mobilstation mit der maximal erlaubten Leistung; falls dabei die berechnete Idealleistung (befohlene Leistung) der Präambel eine festgelegte minimale Leistung unterschreitet, so sendet die Mobilstation mit einer Leistung, die zwischen der berechneten Idealleistung (befohlene Leistung) der Präambel und der festgelegten minimalen Leistung liegt.

In Schritt 29 wird eine bestimmte Zeitdauer, die beispielsweise durch einen Timerablauf ermittelt werden kann, auf den Empfang einer Bestätigungsnachricht gewartet.

Wird in dieser Zeitdauer keine Bestätigungsnachricht, auch "acquisition indicator" genannt, empfangen (Schritt 7.1), so wird in Schritt 211 (Schritt 7.3) die Idealleistung durch ein Inkrementieren der zuletzt berechneten Idealleistung um ΔP₀ = Power Ramp Step [dB] neu berechnet. In Schritt 212 wird überprüft, ob die neu berechnete Idealleistung (befohlene Leistung) die maximal erlaubte Leistung um zumindest einen vorgegebenen Schwellwert, beispielsweise um zumindest 6 dB überschreitet. Ist dies der Fall, so wird festgestellt, dass keine Bestätigungsnachricht empfangen wurde und die Prozedur verlassen E. Eine Ausführungsvariante sieht vor, dass auch für diesen Fall (Überschreiten um zumindest einen vorgegebenen Schwellwert, wie beispielsweise 6 dB) das Verfahren in Schritt 212 fortgesetzt wird.

Überschreitet in Schritt 212 die neu berechnete Idealleistung die maximal erlaubte Leistung nicht um zumindest den vorgegebenen Schwellwert, beispielsweise um zumindest 6 dB, so wird in Schritt 213 (Schritt 7.4) der Zähler zur Zählung der Wiederholungen der Übertragung der Präambel um eins reduziert. Wenn in Schritt 214 (Schritt 7.5) der neue Zählerstand größer Null ist, wird das Verfahren mit Schritt 23 fortgesetzt; ansonsten wird festgestellt, dass keine Bestätigungsnachricht empfangen wurde und die Prozedur verlassen E.

Wird in Schritt 29 eine positive Bestätigungsnachricht ("positive acquisition indicator") empfangen, so wird in Schritt 210 eine RACH Nachricht an eine Basisstation gesendet (Schritt 9). Wird hingegen in Schritt 29 eine negative Bestätigungsnachricht ("negative acquisition indicator") empfangen (Schritt 8), so wird die Prozedur verlassen E.

Die Leistung von Signalen einer folgenden Datenübertragung basiert dann auf der Leistung der zuletzt gesendeten Präambel, deren Empfang durch eine Bestätigungsnachricht bestätigt wurde. Die sinnvollerweise zu verwendende Leistung dieser folgenden Datenübertragung hängt dabei von ihrer Datenrate ab. Insbesondere bei hohen Datenraten kann es vorteilhaft sein, diese Leistung höher als die Leistung der zuletzt gesendeten Präambel zu wählen. In UMTS wird diese Leistungsdifferenz durch den Parameter ΔPₚ₋ₘ [dB] bezeichnet.

Eine Ausführungsvariante der Erfindung sieht vor, dass in Schritt 212 durch einen Zähler die Anzahl der wiederholten Übertragungen der Präambel mit der maximal erlaubten Leistung gezählt wird. Bei Überschreiten einer vorgegeben Anzahl wird die Prozedur verlassen. Dies kann auch dadurch realisiert werden, dass die Prozedur verlassen wird, wenn die berechnete Idealleistung eine vorgegebene Schwellenleistung Pmax überschreitet. Der Unterschied zwischen beiden Varianten liegt darin, dass eine Änderung der Inkrements der Leistung die Anzahl der Wiederholungen im zweiten Fall verändert, im ersten Fall nicht. Vorteilhaft am zweiten Fall ist, dass ein kleines Inkrement, das bevorzugt gewählt wird in Umgebungen, die eine hohe Kollisionswahrscheinlichkeit aufweisen, zu vielen Wiederholungen führt, die gerade in diesen Umgebungen sinnvoll sind.

Eine andere Ausführungsvariante der Erfindung sieht vor, dass die Leistung der Präambel in Schritt 26 auf die festgelegte minimale Leistung gesetzt wird.

Eine andere Ausführungsvariante der Erfindung sieht vor, dass das wiederholte Senden der Präambel mit konstanter Leistung nach einer vorgegebenen Anzahl Nmin von Wiederholungen abgebrochen wird, und durch Inkrementieren der Leistung der zuletzt gesendeten Präambel eine neue Idealleistung berechnet wird, wenn die Leistung der zuletzt gesendeten Präambel zwischen der minimalen Extremleistung und der berechneten Idealleistung liegt. Dadurch wird verhindert, dass in vielen Wiederholungen vergeblich mit zu geringer Leistung gesendet wird, wenn beispielsweise die open loop power control einen viel zu geringen Wert als Anfangsleistung ermittelt hat. Dies kann beispielsweise dadurch realisiert sein, dass die Anfangsleistung mindestens auf einen Wert gesetzt wird, der sich berechnet aus der festgelegten minimalen Leistung minus Nmin * Inkrement. Dies führt zu Nmin Übertragungen der Präambel mit der festgelegten minimalen Leistung, gefolgt von Übertragungen mit höherer Leistung, falls keine Bestätigungsnachricht empfangen wurde.

Ferner sieht eine Ausführungsvariante der Erfindung vor, dass die Leistungsanforderungen einer der Leistungssteuerung folgenden Datenübertragung berücksichtigt wird, um die Anzahl der Wiederholungen des Sendens der Präambel zu reduzieren. Dadurch kann die power ramping Prozedur schon vorab abgebrochen werden, wenn die zur Datenübertragung erforderliche Leistung höher ist als die zum Senden der Präambel erforderliche Leistung. So gibt es Situationen, in denen die Übertragung der Präambel mit einer bestimmten Leistung erfolgreich ist, aber eine folgende Datenübertragung aufgrund bestimmter Umstände dieser Datenübertragung nur bei einer viel höheren oder viel niedrigeren Leistung sinnvoll wäre. So kann beispielsweise eine Datenübertragung mit besonders hoher Datenrate nur mit einer gegenüber der Leistung der RACH Nachricht viel höheren Leistung durchgeführt werden. Wenn dieser Umstand a priori bekannt ist, kann es sinnvoll sein die Leistung der Präambel bzw. der RACH Nachricht durch eine besonderen Maximalwert, der dies berücksichtigt, zu begrenzen. Wenn beispielsweise die Datenübertragung mit hoher Datenrate eine um 10 dB höhere Leistung als Übertragung der Präambel bzw. der RACH Nachricht erfordert, dann kann es sinnvoll sein die Leistung der Präambel bzw. der RACH Nachricht zu begrenzen durch einen Wert, der 10 dB oder 10 - x dB unter der maximal erlaubten Leistung liegt.

Neben den oben erläuterten Ausführungsvarianten der Erfindung liegt eine Vielzahl weiterer Ausführungsvarianten im Rahmen der Erfindung, welche hier nicht weiter beschrieben werden, aber anhand der erläuterten Ausführungsbeispiele einfach in die Praxis umgesetzt werden können. Insbesondere kann die Reihenfolge der Schritte in den obenerläuterten Verfahren variiert werden, Schritte hinzugefügt werden oder entfallen. Ein Beispiel für ein solches Verfahren mit variierten/hinzugefügten Schritten ist die CPCH Access Prozedur, die im Kapitel 6.2. des eingangs genannten ETSI-Dokumentes beschrieben ist. Bei Kenntnis dieser Anmeldung liegt ein Einsatz der Erfindung bei der CPCH Access Prozedur im Rahmen fachmännischen Handelns.

## Patentansprüche

1. Verfahren zur Leistungssteuerung,
- bei dem eine befohlene Präambel-Leistung, für die Übertragung einer Präambel, auf eine Präambel-Anfangsleistung gesetzt wird,
- wenn die befohlene Präambel-Leistung größer als eine maximal erlaubte Leistung ist, wird eine Präambel-Sendeleistung auf die maximal erlaubte Leistung festgesetzt,
- wenn die befohlene Präambel-Leistung kleiner als eine minimal erlaubte Leistung ist, wird die Präambel-Sendeleistung auf einen Wert gesetzt, der größer als die befohlene Präambel-Leistung und kleiner als die minimale erlaubte Leistung ist,
- andernfalls wird die Präambel-Sendeleistung auf die befohlene Präambel-Leistung festgelegt,
- die Präambel mit der Präambel-Sendeleistung übertragen wird.

2. Verfahren nach Anspruch 1, dass die Präambel von einer Mobilstation ausgesendet wird.

3. Verfahren nach einem der vorhergehenden Ansprüche, dass es in einem UMTS System durchgeführt wird.

4. Verfahren nach einem der vorhergehenden Ansprüche, bei dem ein Empfang der Präambel an einer Basisstation durch eine Bestätigungsnachricht, welche von der Basisstation an die Mobilstation gesendet wird, bestätigt wird.

5. Verfahren nach ein Anspruch 4, bei dem bei fehlender Bestätigungsnachricht eine neue erhöhte befohlene Präambel-Leistung festgesetzt wird.

6. Verfahren nach einem der vorhergehenden Ansprüche, bei dem das wiederholte Senden der Präambel mit der maximal erlaubten Leistung durch eine vorgegebene Anzahl von Wiederholungen begrenzt ist.

7. Verfahren nach einem der vorhergehenden Ansprüche, bei dem das wiederholte Senden der Präambel abgebrochen wird, wenn die befohlene Präambel-Leistung die maximal erlaubte Leistung um einen vorgegebenen Schwellwert überschreitet.

8. Anordnung zur Leistungssteuerung
- mit einer Sendeeinrichtung (SE) zum Senden einer Präambel
- mit einer Empfangseinrichtung (EE) zum Empfangen einer Bestätigungsnachricht, und
- mit einer Steuereinrichtung (STE) zur Steuerung der Leistung der Sendeinrichtung, welche derart eingerichtet ist:
- dass eine befohlene Präambel-Leistung, für die Übertragung der Präambel, auf eine Präambel-Anfangsleistung gesetzt wird,
- wenn die befohlene Präambel-Leistung größer als eine maximal erlaubte Leistung ist, wird eine Präambel-Sendeleistung auf die maximal erlaubte Leistung festgesetzt,
- wenn die befohlene Präambel-Leistung kleiner als eine minimal erlaubte Leistung ist, wird die Präambel-Sendeleistung auf einen Wert gesetzt, der größer als die befohlene Präambel-Leistung und kleiner als die minimale erlaubte Leistung ist,
- andernfalls wird die Präambel-Sendeleistung auf die befohlene Präambel-Leistung festgelegt,
- die Präambel mit der Präambel-Sendeleistung gesendet wird.

9. Anordnung zur Leistungssteuerung nach Anspruch 8, ferner eingerichtet dass:
bei fehlender Bestätigungsnachricht eine neue erhöhte befohlene Präambel-Leistung festgesetzt wird.

10. Anordnung zur Leistungssteuerung nach Anspruch 8 oder 9, ferner eingerichtet dass:
das wiederholte Senden der Präambel mit der maximal erlaubten Leistung durch eine vorgegebene Anzahl von Wiederholungen begrenzt ist.

11. Anordnung zur Leistungssteuerung nach Anspruch 8, 9 oder 10, ferner eingerichtet dass:
das wiederholte Senden der Präambel abgebrochen wird, wenn die befohlene Präambel-Leistung die maximal erlaubte Leistung um einen vorgegebenen Schwellwert überschreitet.

12. Anordnung zur Leistungssteuerung nach einem der Ansprüche 8 bis 11,
dass sie in einem UMTS System angeordnet ist.

## Claims

1. Method for controlling power
- in which a commanded preamble power for transmitting a preamble is set to a preamble initial power,
- if the commanded preamble power is greater than a maximum permissible power, a preamble transmission power is set to the maximum permissible power,
- if the commanded preamble power is less than a minimum permissible power, the preamble transmission power is set to a value which is greater than the commanded preamble power and less than the minimum permissible power,
- otherwise, the preamble transmission power is set to the commanded preamble power,
- the preamble is transmitted with the preamble transmission power.

2. Method according to Claim 1, in which the preamble is emitted by a mobile station.

3. Method according to one of the preceding claims, in which it is carried out in a UMTS system.

4. Method according to one of the preceding claims, in which reception of the preamble at a base station is acknowledged by an acknowledgement message which is transmitted from the base station to the mobile station.

5. Method according to Claim 4, in which, if the acknowledgement message is lacking, a new increased commanded preamble power is set.

6. Method according to one of the preceding claims, in which the retransmission of the preamble with the maximum permissible power is limited by a predetermined number of retransmissions.

7. Method according to one of the preceding claims, in which the retransmission of the preamble is aborted if the commanded preamble power exceeds the maximum permissible power by a predetermined threshold value.

8. Arrangement for controlling power
- with a transmitting device (SE) for transmitting a preamble
- with a receiving device (EE) for receiving an acknowledgement message, and
- with a control device (STE) for controlling the power of the transmitting device, which is set up in such a manner
- that a commanded preamble power for transmitting the preamble is set to a preamble initial power,
- if the commanded preamble power is greater than a maximum permissible power, a preamble transmission power is set to the maximum permissible power,
- if the commanded preamble power is less than a minimum permissible power, the preamble transmission power is set to a value which is greater than the commanded preamble power and less than the minimum permissible power,
- otherwise, the preamble transmission power is set to the commanded preamble power,
- the preamble is transmitted with the preamble transmission power.

9. Arrangement for controlling power according to Claim 8, also set up in such a manner that:
if the acknowledgement message is lacking, a new increased commanded preamble power is set.

10. Arrangement for controlling power according to Claim 8 or 9, also set up in such a manner that:
the retransmission of the preamble with the maximum permissible power is limited by a predetermined number of repetitions.

11. Arrangement for controlling power according to Claim 8, 9 or 10, also set up in such a manner that:
the retransmission of the preamble is aborted if the commanded preamble power exceeds the maximum permissible power by a predetermined threshold value.

12. Arrangement for controlling power according to one of Claims 8 to 11,
which is arranged in a UMTS system.

## Revendications

1. Procédé destiné à la commande d'une puissance,
- dans lequel une puissance de préambule ordonnée, pour la transmission d'un préambule, est établie à une puissance initiale de préambule,
- lorsque la puissance de préambule ordonnée est plus grande qu'une puissance autorisée maximale, une puissance d'envoi de préambule est fixée à la puissance autorisée maximale,
- lorsque la puissance de préambule ordonnée est plus petite qu'une puissance autorisée minimale, la puissance d'envoi de préambule est établie à une valeur qui est plus grande que la puissance de préambule ordonnée et plus petite que la puissance autorisée minimale,
- ou bien la puissance d'envoi de préambule est fixée à la puissance de préambule ordonnée,
- le préambule est transmis avec la puissance d'envoi de préambule.

2. Procédé selon la revendication 1, **caractérisé en ce que** le préambule est envoyé par une station mobile.

3. Procédé selon l'une des revendications précédentes, **caractérisé en ce qu'**il est exécuté dans un système UMTS.

4. Procédé selon l'une des revendications précédentes, dans lequel une réception du préambule est confirmée au niveau d'une station de base par le biais d'une notification de confirmation qui est envoyée par la station de base à la station mobile.

5. Procédé selon la revendication 4, dans lequel dans le cas d'une absence de notification de confirmation une puissance de préambule ordonnée augmentée est fixée.

6. Procédé selon l'une des revendications précédentes, dans lequel l'envoi répété du préambule avec la puissance autorisée maximale est limité par le biais d'un nombre prédéterminé de répétitions.

7. Procédé selon l'une des revendications précédentes, dans lequel l'envoi répété du préambule est interrompu lorsque la puissance de préambule ordonnée est supérieure à la puissance autorisée maximale d'une valeur seuil prédéterminée.

8. Agencement destiné à la commande d'une puissance
- avec un dispositif d'envoi (SE) destiné à envoyer un préambule
- avec un dispositif de réception (EE) destiné à recevoir une notification de confirmation, et
- avec un dispositif de commande (STE) destiné à la commande de la puissance du dispositif d'envoi, lequel est configuré de telle sorte :
- qu'une puissance de préambule ordonnée, pour la transmission du préambule, est établie à une puissance initiale de préambule,
- lorsque la puissance de préambule ordonnée est plus grande qu'une puissance autorisée maximale, la puissance d'envoi de préambule est fixée à la puissance autorisée maximale,
- lorsque la puissance de préambule ordonnée est plus petite qu'une puissance autorisée minimale, la puissance d'envoi de préambule est établie à une valeur qui est plus grande que la puissance de préambule ordonnée et plus petite que la puissance autorisée minimale,
- ou bien la puissance d'envoi de préambule est fixée à la puissance de préambule ordonnée,
- le préambule est envoyé avec la puissance d'envoi de préambule.

9. Agencement destiné à la commande d'une puissance selon la revendication 8, configuré en outre en ce que :
dans le cas d'une absence de notification de confirmation une nouvelle puissance de préambule ordonnée augmentée est fixée.

10. Agencement destiné à la commande d'une puissance selon la revendication 8 ou 9, configuré en outre en ce que :
l'envoi répété du préambule avec la puissance autorisée maximale est limité par le biais d'un nombre prédéterminé de répétitions.

11. Agencement destiné à la commande d'une puissance selon la revendication 8, 9 ou 10, configuré en outre en ce que :
l'envoi répété du préambule est interrompu lorsque la puissance de préambule ordonnée dépasse la puissance autorisée maximale d'une valeur seuil prédéterminée.

12. Agencement destiné à la commande d'une puissance selon l'une des revendications 8 à 11, **caractérisé en ce qu'**il est disposé dans un système UMTS.
